# EUROPÄISCHE PATENTSCHRIFT

(11) **EP 1 614 556 B1**
(45) Veröffentlichungstag und Bekanntmachung des Hinweises auf die Patenterteilung: **01.08.2007**
(21) Anmeldenummer: 05012178.9
(22) Anmeldetag: 07.06.2005
(51) Int. Cl.: B60D 1/54

(54) **Anhängekupplung für Kraftfahrzeuge**
Trailer coupling for motor vehicles
Attelage de remorque pour véhicules automobiles

(30) Priorität: 07.07.2004 DE 102004033041
(43) Veröffentlichungstag der Anmeldung: 11.01.2006
(73) Patentinhaber: WESTFALIA - Automotive GmbH, 33378 Rheda-Wiedenbrück (DE)
(72) Erfinder: Aufderheide, Reinhold, 33397 Rietberg (DE); Hermbusch, Gerhard, 33449 Langenberg (DE); Krohn, Gerald, 33378 Rheda-Wiedenbrück (DE); Peitz, Jürgen, 33378 Rheda-Wiedenbrück (DE); Wyrwich, Martin, 33378 Rheda-Wiedenbrück (DE)
(74) Vertreter: Grosse, Wolf-Dietrich Rüdiger

(56) Entgegenhaltungen:
- EP-A- 1 024 036
- EP-A- 1 142 732
- EP-A- 1 288 026
- EP-A- 1 428 697
- EP-A- 1 504 928

## Beschreibung

Die Erfindung betrifft eine Anhängekupplung für Kraftfahrzeuge, umfassend eine fahrzeugfest angeordnete, aus einer verriegelten Ruhelage in eine verriegelte Betriebslage und umgekehrt schwenkbar gelagerte Kugelstange, die sowohl in ihrer Ruhelage als auch in ihrer Betriebslage über in Eingriff bringbare Formschlusskonturen einerseits eines Kugelstangenlagerkopfes und andererseits eines diesem gegenüberliegenden Anbauteiles drehfest festlegbar ist und an ihrem freien, vom Kugelstangenlagerkopf entfernten Ende eine Kupplungskugel trägt, wobei der Kugelstange zum Festlegen bzw. Freigeben der Verriegelung ein im Bereich des Kugelstangenlagerkopfes mit radial ein- und ausrückbaren Rastmitteln zusammenwirkender, axial verstellbarer, gegen ein anstehendes Kraftelement zurückstellbarer Sperrbolzen zugeordnet ist.

Bei einer durch die DE 198 59 961 A1 bekanntgewordenen Anhängekupplung ist die fahrzeugfest angeordnete, schwenkbar sowie axial verschieblich gelagerte Kugelstange sowohl in ihrer Ruhelage als auch in ihrer Betriebslage über in Eingriff bringbare Formschlusskonturen einerseits des Kugelstangenlagerkopfes und andererseits eines diesem gegenüberliegenden Anbauflansches drehfest festlegbar. Die Kugelstange wird sowohl in der Ruhelage, in welcher sich die Kugelstange in etwa quer zur Fahrzeuglängsrichtung unter dem Stoßfänger befindet, als auch in der Betriebslage, in welcher sich die Kugelstange im wesentlichen in Fahrzeuglängsrichtung befindet, mittels der Formschlussverbindungen drehfest festgelegt. Die Formschlussverbindungen in Form einer Verzahnung sowie einer Gegenverzahnung greifen in den Drehendstellungen des Kugelstangenlagerkopfes ineinander.

Zum Festlegen und Freigeben dieser bekannten Kugelstange dient ein verstellbares, die Lagerhülse bzw. den Kugelstangenlagerkopf abstützendes Widerlager, das wie der Kugelstangenlagerkopf auf einem Lagerbolzen angeordnet ist, der über einen Befestigungsansatz bzw. Anbauflansch an einem mit dem Fahrzeug verbundenen Querrohr befestigt ist. In der einen Axialstellung des die Lagerhülse abstützenden Widerlagers stehen die Formschlusskonturen von Lagerbolzen und Lagerhülse so miteinander in Eingriff, dass die Lagerhülse und damit die Kugelstange gegenüber dem Fahrzeug nicht verdreht werden kann. In der zweiten Axialstellung, in der das Widerlager dann von dem Anbauflansch bzw. Befestigungsansatz entfernt ist, kann die Lagerhülse so weit von dem Anbauflansch des Lagerbolzens abgerückt werden, dass die Formschlusskonturen außer Eingriff kommen und danach die Lagerhülse samt daran angeordneter Kugelstange zwischen der Ruhe- und der Betriebslage verschwenkt werden kann. Die jeweilige Verriegelungsposition wird danach durch eine erneute Axialverschiebung des Widerlagers erreicht.

Weiterhin sind Anhängekupplungen bekannt, die zum Festlegen und Freigeben der Kugelstange eine Verriegelung aufweisen, die einen gegen ein anstehendes Kraftelement, eine Druckfeder, über ein von außen betätigbares Druck- oder Zugmittel zurückstellbaren Sperrbolzen besitzt, dem radial ein- und ausrückbare Rastmittel, insbesondere Kugeln, zugeordnet sind, wie aus der DE-U 94 08 478.5 bekannt. Das Vorspannen einer Druckfeder erfolgt hierbei mittels eines Handrades, über das eine Zahnstange einen Bowdenzug als Verbindung zum Sperrbolzen betätigt.

Aus der EP 0 850 147 B1 ist eine Anhängekupplung mit einem motorischen Antrieb unter Zwischenschaltung eines Umlaufrädergetriebes zum Verschwenken der Kugelstange zwischen ihrer Ruhe- und ihrer Betriebsstellung bekannt. Die Kugelstange selbst ist hierbei als Teil einer Spindel eines Spindel-Mutter-Antriebes ausgebildet und axial verstellbar. Sie besitzt eine eingeschraubte Verstellspindel, die über ein Stirnrad- sowie Planetengetriebe von einem elektrischen Motor gedreht wird. Die Kugelstange ist in einer Führungshülse angeordnet, die mit einer Zwangsführung ausgebildet ist und bewirkt, dass nach einem geführten Axial-Verstellweg die Kugelstange dann mit in ihrer Betriebsstellung nach oben zeigender Kugel gedreht wird.

Der Erfindung liegt die Aufgabe zugrunde, eine gattungsgemäße Anhängekupplung zu schaffen, die in einfacher Bauweise ein betriebssicheres, gezielte Bewegungsabläufe ermöglichendes motorisches Auslösen der Verriegelung zum Schwenken der Kugelstange ermöglicht.

Diese Aufgabe wird erfindungsgemäß dadurch gelöst, daß der Sperrbolzen zur Antriebsseite hin mit einer Axial-Schubstange ausgebildet und über die Axial-Schubstange motorisch ausrückbar an einen Antrieb angeschlossen ist, der auf seiner Antriebswelle mit einem Stellmittel versehen ist, das zeitversetzt zunächst mit einem orthogonal zur Axial-Schubstange in deren Ausrückweg angeordnetem Schieber und nach einer linearen Bewegung des Schiebers in Eingriff mit der Axial-Schubstange zu deren linearen Verstellung kommt. Es lässt sich damit der Sperrbolzen bei Betätigung, beispielsweise eines von außen zugänglichen Tasters, des Antriebs direkt gegen das Kraftelement, vorzugsweise eine sich dabei vorspannende Druckfeder, zurückziehen bzw. ausrücken, so daß die Verbindung der Formschlusskonturen, z.B. Kugeln des Kugelstangenlagerkopfes, denen in dem Anbauteil Kalotten zugeordnet sind, freikommt.

Die somit entriegelte Kugelstange kann dann unter der Schwerkraft bei gleichzeitiger axialer Verschiebung in eine Zwischenposition schwenken. Aus dieser heraus lässt sie sich manuell in die gewünschte, vorteilhaft durch einen äußeren Anschlag gesicherte Drehendlage verschwenken und erneut verriegeln, wozu dem Kraftelement die Entspannung ermöglicht wird, so daß der Sperrbolzen vorrücken und die Rastelemente wieder nach außen in ihre Einrastposition drücken kann. Die Lage der in ihre Betriebs- oder Ruhestellung verschwenkten Kugelstange ist danach bis zu einem neuen motorischen Auslösen, d.h. Ausrücken des Sperrbolzens gesichert. Durch das erfindungsgemäß zeitversetzt zum Eingriff und damit zur Wirkung gebrachte Stellmittel lässt sich ein zwei-stufiger, gezielt gesteuerter Bewegungs-Folgeablauf erreichen. Dieser gewährleistet, daß erst der in der Ruhe- und der Betriebslage der Kugelstange ein ungewolltes Lösen des Schwenksystems verhindernde Schieber verstellt werden muß, bevor die Axial-Schubstange mit dem Sperrbolzen soweit ausgerückt bzw. herausgezogen werden kann, daß dessen Rastmittel und damit auch die Formschlussverbindung der Kugelstange freikommen, womit dem Kugelstangenlagerkopf ein Verschwenken möglich ist.

Eine vorteilhafte Ausführung der Erfindung sieht vor, daß das Stellmittel zwei äußere, mit nasenartigen Vorsprüngen temporär mit einem am vorderen, von dem Sperrbolzen entfernten Ende der Axial-Schubstange vorgesehenen Querbolzen zusammmenwirkende Nockenscheiben und eine mittlere Nockenscheibe aufweist, die mit mindestens einem nasenartigen Vorsprung in Rotationsrichtung voreilend zu den nasenartigen Vorsprüngen der äußeren Nockenscheiben auf der Antriebswelle angeordnet ist und temporär mit einem Anschlag des Schiebers zusammenwirkt. Beim Starten des Antriebs gelangen somit zunächst die vorteilhaft zwei nasenartigen Vorsprünge der mittleren Nockenscheibe, die einen solchen Vorsprung an jeder ihrer Seiten aufweist, in Kontakt mit dem Anschlag des Schiebers, nehmen diesen linear bzw. translatorisch mit und machen in der Folge den Ausrückweg für die Axial-Schubstange mit dem Sperrbolzen frei. Das Ausrücken setzt ein, sobald die nachfolgenden bzw. -eilenden nasenartigen Vorsprünge der äußeren Nockenscheiben auf den Querbolzen der Axial-Schubstange aufgelaufen sind. Während einer kurzen Zeitspanne wird dann sowohl der Schieber als auch gleichzeitig die Axial-Schubstange translatorisch verstellt bzw. herausgezogen, bis sich die nasenartigen Vorsprünge der mittleren Nockenscheibe, für die zum Passieren in dem Schieberanschlag eine Schlitzausnehmung vorgesehen ist, von dem Schieberanschlag im Zuge der weiteren Rotation gelöst haben.

Zu diesem Zeitpunkt haben die nasenartigen Vorsprünge der äußeren Nockenscheiben die Axial-Schubstange bereits so weit herausgezogen, daß sich einerseits die Verriegelung des Kugelstangenlagerkopfes gelöst hat und der Sperrbolzen das axiale Abrücken und Verschwenken des Kugelstangenlagerkopfes nicht mehr verhindern kann. Andererseits kann aber auch der vorteilhaft gegen ein ihn selbsttätig in seine Ausgangslage zurückbewegendes Federmittel vorgeschobene Schieber die Auslösung nicht mehr beeinträchtigen. Denn der sich zurückbewegende Schieber legt sich vielmehr an die herausgezogene, seinen Rückstellweg kreuzende Axial-Schubstange an.

Wenn nach einer Ausgestaltung der Erfindung die Nockenscheiben mit rechteckigen Ausnehmungen auf einem Vierkantabschnitt der Antriebswelle angeordnet sind, lässt sich nicht nur eine einfache Montage erreichen, sondern gleichzeitig auch die mit der Rotation der Antriebswelle sofort einhergehende positionsgenaue Mitnahme der Nockenscheiben.

Eine bevorzugte Ausführung der Erfindung sieht vor, daß dem Schieber ein den Verriegelungszustand der Kugelstange signalisierender Mikroschalter zugeordnet, ist. Dieser ermöglicht die Feststellung und gewährleistet eine ordnungsgemäße Verriegelung der Kugelstange, denn nur wenn diese vorliegt, gibt er zum Beispiel durch eine signaltechnische Verknüpfung mit dem Bordsystem des Fahrzeugs eine für den Fahrzeugführer wahrnehmbare Kennung direkt in das Fahrzeuginnere.

Nach einem bevorzugten Vorschlag der Erfindung ist der Sperrbolzen zentral in einer Hohlwelle angeordnet, auf der der Kugelstangenlagerkopf gelagert ist. Durch die Abkehr von einer auf einem Lagerbolzen bzw. einer durchgängigen Lagerachse gelagerten Kugelstange, die somit vielmehr auf einer Hohlwelle mit zentral integrierter Verriegelung angeordnet ist, lässt sich ein in sich geschlossenes, weitestgehend wartungsfreies System erreichen. Die Hohlwelle kann weiterhin vorteilhaft über einen ringartigen Kragen mit einem Anbauflansch als Verbindung zu einem fahrzeugfesten Querträger der Anhängevorrichtung verschraubt sein.

Nach einer vorteilhaften erfindungsgemäßen Ausgestaltung sind der Antrieb, der Schieber, der Mikroschalter, das Stellmittel und gegebenenfalls weitere Bauteile als Gehäuseeinheit in einem zweiteiligen Kunststoff-Gehäuse angeordnet, das auch das vordere Ende der Axial-Schubstange aufnimmt. Es lässt sich damit eine schon mit allen Funktionsteilen vorzumontierende bzw. vorgefertigte Einheit erreichen, für die zudem werkzeugtechnisch automatisierte und kostengünstig zu fertigende Bauteile, wie insbesondere das aus Kunststoff bestehende Ober- und Unterteil des Gehäuses, verwendet werden können.

Nach einem Vorschlag der Erfindung erlaubt es die vormontierte Gehäuseeinheit zudem, daß eine einfache Clipverbindung die Befestigungslage der auf die Hohlwelle aufgeschobenen Gehäuseeinheit sichert.

Ein bevorzugter Vorschlag der Erfindung sieht vor, daß dem Sperrbolzen in zwei im Abstand parallel voneinander vorgesehenen Radialebenen gegenläufig wirkende Rastmittel zugeordnet sind. Hierbei lässt sich mit ausschließlich der hinteren, dem Anbauflansch zugewandten Ebene in den Drehendlagen der Kugelstange deren Verriegelung begünstigen, wobei die dortigen Rastmittel (Kugeln) den Kugelstangenlagerkopf in diese Ebene hineinziehen. Dagegen sind die Rastmittel der vorderen Radialebene in diesem Betriebszustand für die Verriegelung der Formschlusskonturen unwirksam.

Beim Auslösen zum Verschwenken des Kugelstangenlagerkopfes unterstützen dann aber die Rastmittel (Kugeln) der vorderen Radialebene das Abdrücken des Kugelstangenlagerkopfes aus seiner Formschlußverbindung mit dem Anbauflansch, weil die Rastmittel der vorderen Radialebene den Kugelstangenlagerkopf zusätzlich definiert in Löserichtung wegdrücken. Diese unterstützende Beaufschlagung des Kugelstangenlagerkopfes in Löserichtung gewährleistet, daß ein Ausrücken der Kugelstange bzw. des Kugelstangenlagerkopfes auch bei tiefen Temperaturen oder bei Verschmutzung der Anhängekupplung, zumal wenn diese lange nicht benutzt und betätigt worden ist, mit dann möglicherweise in ihren Sitzen verbackenen Rastmitteln ohne Beschädigungen hervorzurufen möglich ist.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: in einer perspektivischen Gesamtansicht eine ohne motorische Hub-Ausrückung gezeigte Anhängekupplung mit in ihrer Ruhelage verriegelter Kugelstange, in der sich diese unter einem Stoßfänger eines nicht dargestellten Kraftfahrzeugs befindet;
- Fig. 2: in einer schematischen, teilgeschnittenen Ansicht als Einzelheit der Anhängevorrichtung nach Fig. 1 eine deren Kugelstangenlagerkopf aufnehmende Hohlwelle mit darin angeordnetem Sperrbolzen und mit diesem verbundener Axial-Schubstange, ohne motorischen Antrieb dargestellt;
- Fig. 3: in einer perspektivischen Gesamtansicht eine an den Anbauflansch der Anhängekupplung nach Fig. 1, d.h. dort links montierte AntriebsGehäuseeinheit zum motorischen Auslösen eines Sperrbolzens (vgl. Fig. 2) zur Freigabe der Schwenkbewegung der nicht dargestellten Kugelstange;
- Fig. 4: den Gegenstand der Fig. 3 von oben gesehen, ohne Gehäuse-Oberteill dargestellt;
- Fig. 5: den Gegenstand nach Fig. 3 bei entferntem Gehäuse-Unterteil, in einer gegenüber der Fig. 3 in der Zeichnungsebene um 180° nach rechts gedrehten Ansicht in das Gehäuse-Oberteil;
- Fig. 6: den Gegenstand nach Fig. 5 ohne das Gehäuse-Oberteil, in einer Ausgangsstellung zum motorischen Auslösen des mit der Axial-Schubstange verbundenen Sperrbolzens und damit der Kugelstangen-Verriegelung dargestellt;
- Fig. 7: die Bauteile der Fig. 6 in einer ersten Bewegungsstufe zum linearen bzw. translatorischen Verstellen eines federbeaufschlagten Schiebers;
- Fig. 8: die Bauteile der Fig. 7 in einer zweiten Bewegungsstufe zur gleichzeitigen linearen bzw. translatorischen Verstellung der Axial-Schubstange des Sperrbolzens;
- Fig. 9: die Bauteile der Fig. 8 mit sich von dem Schieber lösenden Stellmittel;
- Fig.10: die Bauteile der Fig. 9 in einer folgenden Bewegungslage;
- Fig.11: die Bauteile der Fig. 10 in einer weiteren Bewegungslage, mit jetzt auch von der Axial-Schubstange gelöstem Stellmittel;
- Fig.12: den Gegenstand der Fig. 11 in einer Folgestellung seiner Bauteile;
- Fig.13: den Gegenstand der Fig. 12 in einer Stellung seiner Bauteile vor dem Erreichen der Grundstellung; und
- Fig.14: die Bauteile der Fig. 13 in ihrer Grundstellung.

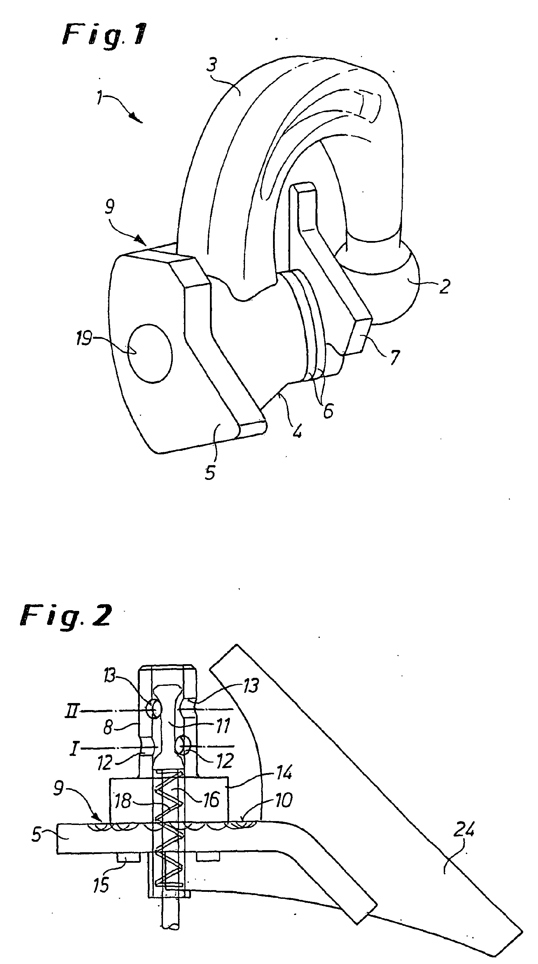

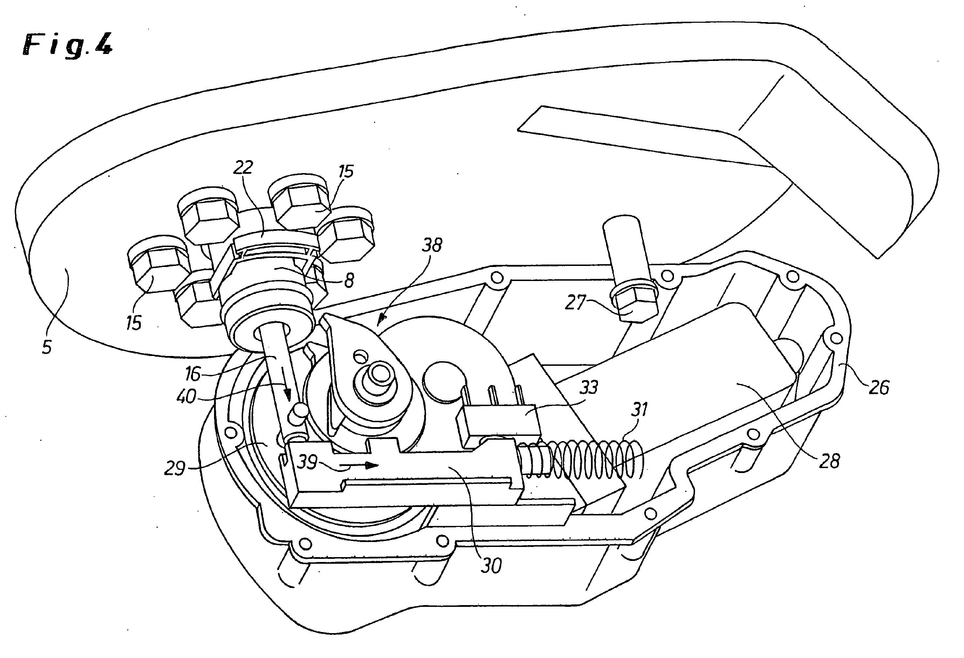

Eine in Fig. 1 dargestellte Anhängekupplung 1 ist über einen ein- oder mehrteiligen Querträger an einem nicht dargestellten Fahrzeug befestigt. Die Anhängekupplung 1 umfaßt im Ausführungsbeispiel eine gekröpfte, an ihrem freien Ende eine Kupplungskugel 2 tragende Kugelstange 3, hier in ihrer unter das Fahrzeug hinter dem Stoßfänger verschwenkten Ruhelage, die mit ihrem Kugelstangenlagerkopf 4 zwischen einem Anbauflansch 5 und einem hier unter Zwischenschaltung einer Ausgleichsscheibe 6 gegenüberliegenden Verbindungsblech 7 angeordnet ist. Statt einer Befestigung zusätzlich über ein Verbindungsblech 7 mit vorgeschalteter Ausgleichsscheibe 6 kann die Kugelstange 3 an diesem Ende auch durch Endkappen bzw. -hülsen verschlossen und nur über den Anbauflansch, gegebenenfalls unter Einbeziehung eines Knotenbleches, befestigt werden. Die Halterung des Kugelstangenlagerkopfes 4 in seiner Einbaulage erfolgt mittels einer Hohlwelle 8 (vgl. die Fig. 2 und 4), auf der die Kugelstange 3 mit ihrem Kugelstangenlagerkopf 4 gelagert ist, wozu die Hohlwelle 8 einen ringartigen Kragen 14 aufweist, über den sie zudem mittels Schrauben 15 mit dem Anbauflansch 5 verschraubt ist.

Sowohl in der Ruhestellung nach Fig. 1 als auch in der die Betriebsstellung der Kugelstange 3 definierenden Drehendlage ist die Kugelstange 3 drehfest verriegelt. Hierzu ist einerseits eine Formschlussverbindung 9, bestehend in den Ausführungsbeispielen aus Kugelkalotten 10 des Anbauflansches 5 (vgl. die Fig. 2) und diesen in der gegenüberliegenden Stirnfläche des Kugelstangenlagerkopfes 4 zugeordneten Kugeln (nicht gezeigt), in Eingriff. Andererseits befindet sich ein zentral in der Hohlwelle 8 angeordneter, an seinem vorderen Ende hundeknochenartig ausgebildeter Sperrbolzen 11 in einer Sperrlage. Zur Verriegelung der Drehendlagen sind für den Sperrbolzen 11 in einer hinteren Radialebene I in Radialbohrungen 12 der Hohlwelle 8 mehrere Rastmittel in Form von Kugeln vorgesehen, die von dem Sperrbolzen 11 nach außen gedrückt werden und dabei in eine ihnen in einem Lagerring des Kugelstangenlagerkopfes 4 zugeordnete Aufnahme, ausgebildet beispielsweise als Ringnut oder Rille (nicht gezeigt), bewegt werden. Diese Aufnahme ist an ihrer zu dem Anbauflansch 5 hin gerichteten Lauffläche mit einer Anlaufschräge versehen, die in der in den Drehendlagen verriegelten Position der Kugelstange 3 eine gezielt ausgerichtete Kraft zur unterstützenden axialen Beaufschlagung der Kugelstange 3 bzw. des Kugelstangenlagerkopfes 4 in Richtung auf den Anbauflansch 5 bewirkt.

Dem Sperrbolzen 11 sind in einer zweiten, vorderen Radialebene II in Radialbohrungen 13 der Hohlwelle 8 umfangsverteilt weitere Rastmittel in Form von Kugeln und eine Aufnahme, ausgebildet beispielsweise wiederum als Ringnut oder Rille eines Lagerringes, zugeordnet. Diese vordere Aufnahme ist mit einer Anlaufschräge ausgebildet, die eine gezielt gegenläufig zur Anlaufschräge der vorderen Radialebene I ausgerichtete Kraft, nämlich weg vom Anbauflansch 5 bewirkt. In der Verriegelungsposition mit in Eingriff befindlicher Formschlussverbindung 9 sind die Kugeln der vorderen Radialebene II unwirksam; sie sind aus ihrer Aufnahme herausgetreten und in ihren Radialbohrungen 13 nach innen gefallen. Um diesen Freiraum zu schaffen, ist das vordere Ende des Sperrbolzens 11 hundeknochenartig und somit einem geringeren Durchmesser in diesem Bereich ausgebildet. Zur Offenbarung der vorbeschriebenen Zwei-Ebenen-Verriegelung sowie prinzipiell der Lagerung einer Kugelstange auf einer Hohlwelle wird Bezug genommen auf die ältere Patentanmeldung Nr. 103 20 302.8.

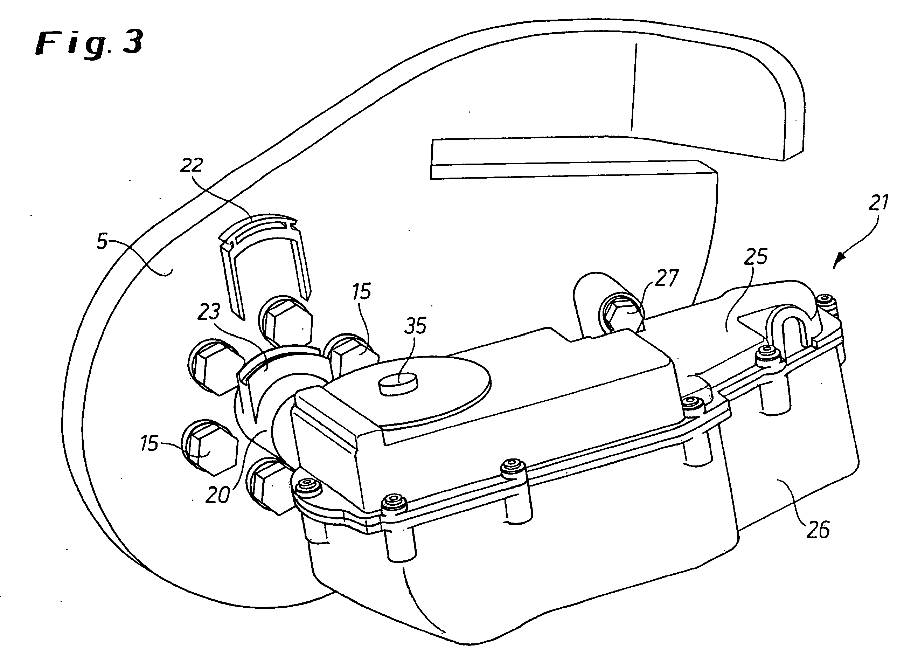

Zum Auslösen und damit Entsperren der Formschlussverbindung 9 und der Verriegelung des Sperrbolzens 11 ist dieser mit einer Axial-Schubstange 16 verbunden, die eine in einem Hohlraum abgestützte, den Sperrbolzen 11 nach vorne in Einrückrichtung beaufschlagende Druckfeder 18 aufweist. Die Axial-Schubstange 16 kragt durch eine Bohrung 19 (vgl. Fig. 1) des Anbauflansches 5, dem optional gemäß Fig. 2 zur Verstärkung noch ein Knotenblech 24 zugeordnet ist, über diesen hinaus zur Antriebsseite vor (vgl. Fig. 4). An dieser Antriebsseite ist nach Fig. 3 über einen zylindrischen Kammeransatz 20 eine Gehäuseeinheit 21 aufgesteckt und über einen Clip 22, der auf ein Kontur angepasstes Schulterstück 23 des Kammeransatzes 20 aufgesteckt wird, an dem Anbauflansch 5 befestigt. Die mit allen Funktionsteilen vormontierte Gehäuseeinheit 21 besteht aus einem Gehäuse-Oberteil 25 und einem Gehäuse-Unterteil 26, jeweils hergestellt aus Kunststoff, die entlang der Trennebene miteinander verschraubt sind. Zusätzlich zu der Clipverbindung 22, 23 ist die Gehäuseeinheit 21 über eine Schraube 27 am Anbauflansch 5 befestigt.

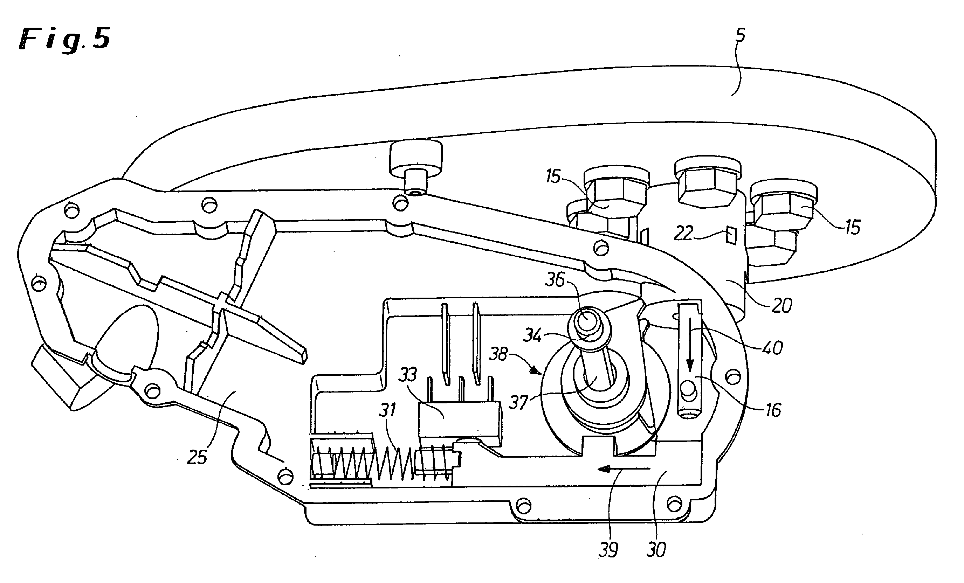

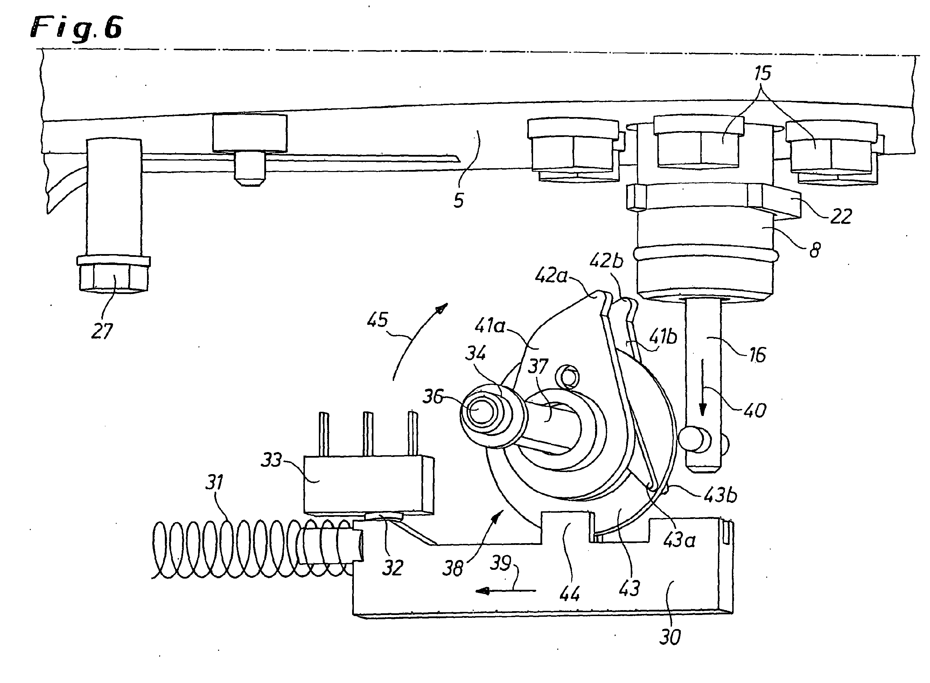

Wie sich aus der Zusammenschau der Fig. 4 und 5 näher entnehmen lässt, sind in dem Gehäuse-Unterteil 26 ein Antrieb 28 und sein Getriebe 29 untergebracht, während in dem Gehäuse-Oberteil 25 ein Schieber 30 sowie eine ihn beaufschlagende Feder 31 und ein Mikroschalter 32 (vgl. Fig. 6) einschließlich Schaltergehäuse 33 angeordnet sind.

Eine das Getriebe 29 durchsetzende, in einem Lagerpunkt 34 einerseits des Gehäuse-Unterteils 26 bzw. andererseits einem Lagerpunkt 35 im Gehäuse-Oberteil 25 (vgl. Fig. 3) der Gehäuseeinheit 21 gelagerte Antriebswelle 36 ist mit einem Vierkantabschnitt 37 ausgebildet. Auf diesen ist ein Stellmittel 38 zum linearen Verschieben des Schiebers 30 in Pfeilrichtung 39 gegen die Kraft der Druckfeder 31 und anschließendem Herausziehen der orthogonal zu dem Schieber 30 vorgesehenen Axial-Schubstange 16 einschließlich des damit verbundenen Sperrbolzens 11 (vgl. Fig. 2) in Pfeilrichtung 40 aufgesteckt. Das Stellmittel 38 setzt sich aus zwei äußeren Kurven- bzw. Nockenscheiben 41 a, 41 b mit jeweils einem nasenartigen Vorsprung 42a, 42b und einer zwischen diesen angeordneten mittleren Kurven- bzw. Nockenscheibe 43 mit einem daran an jeder Seite ausgebildeten nasenartigen Vorsprung 43a, 43b zusammen (vgl. die Fig. 6 bis 14).

Die nasenartigen Vorsprünge 42a, 42b der äußeren Nockenscheiben 41, 41 b ragen über den Umfang der mittleren Nockenscheibe 43 hinaus, während die nasenartigen Vorsprünge 43a, 43b im Umfang der mittleren Nockenscheibe 43 liegen, allerdings gegenüber den einen kleineren Durchmesser aufweisenden äußeren Nockenscheiben 41 a, 41 b vorspringen. Die mittlere Nockenscheibe 43 taucht peripher in eine Schlitzausnehmung eines Anschlags 44 ein, gegen dessen neben der Schlitzausnehmung verbleibenden Wandstegen im Zuge der Rotation der Antriebswelle 36 mit dem Stellmittel 38 die nasenartigen Vorsprünge 43a, 43b der mittleren Nockenscheibe 43 temporär auftreffen.

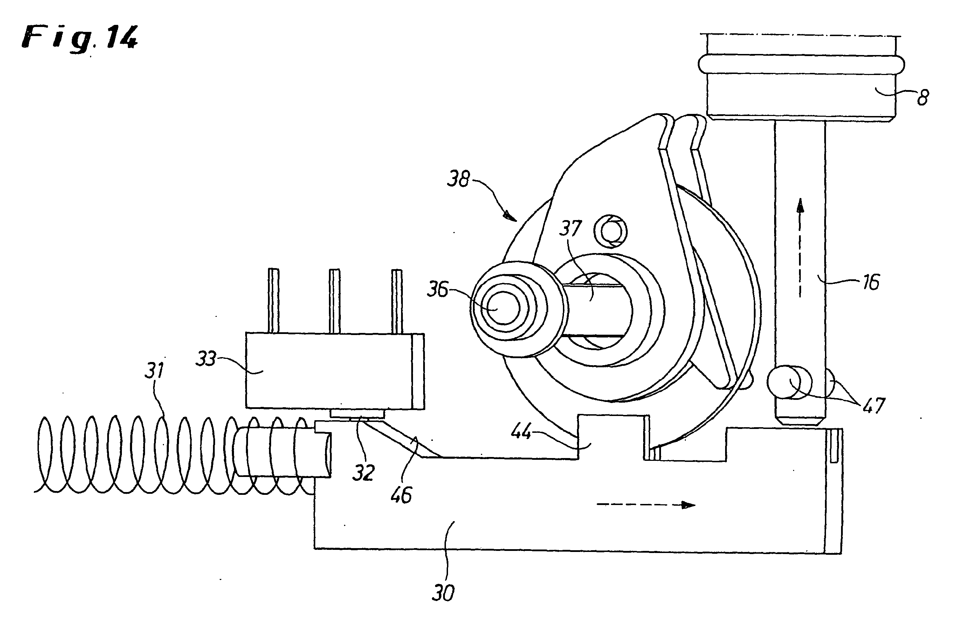

Das Entsperren einerseits der Verriegelung des Sperrbolzens 11 und andererseits der Formschlussverbindung 9 zwischen dem Kugelstangenlagerkopf 4 der Kugelstange 3 und dem Anbauflansch 5 durch das Stellmittel 38 wird nachfolgend anhand der aufeinander folgende Betriebsstellungen zeigenden Fig. 6 bis 14 näher beschrieben. Die Grund- bzw. Ausgangsstellung lässt sich der Fig. 6 (und Fig. 14) entnehmen, in der der Mikroschalter 32 die ordnungsgemäße Verriegelung (der Betriebslage oder der Ruhelage der Kugelstange) signalisiert. Ein ungewolltes Lösen des Schwenksystems wird in diesen Stellungen sicher durch den die Bewegungsrichtung 40 der Axial-Schubstange 16 schneidenden Schieber verhindert, an den die Axial-Schubstange 16 anschlagen würde, bevor eine Entsperrung der Verriegelung möglich wäre. Die Nockenscheiben 41 a, 41 b bzw. 43 sind auf dem Vierkantabschnitt 37 der Antriebswelle 36 so angeordnet, daß die nasenartigen Vorsprünge 43a, 43b der mittleren Nockenscheibe 43 den nasenartigen Vorsprüngen 42a, 42b der äußeren Nockenscheiben 41 a, 41 b in Rotationsrichtung gemäß Pfeil 45 vorgelagert und somit voreilend sind.

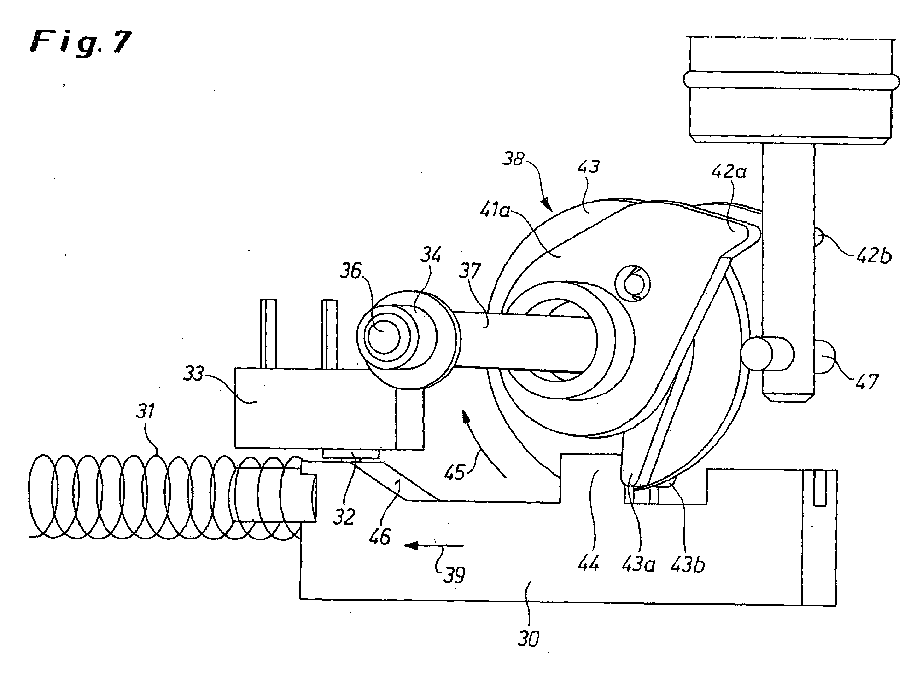

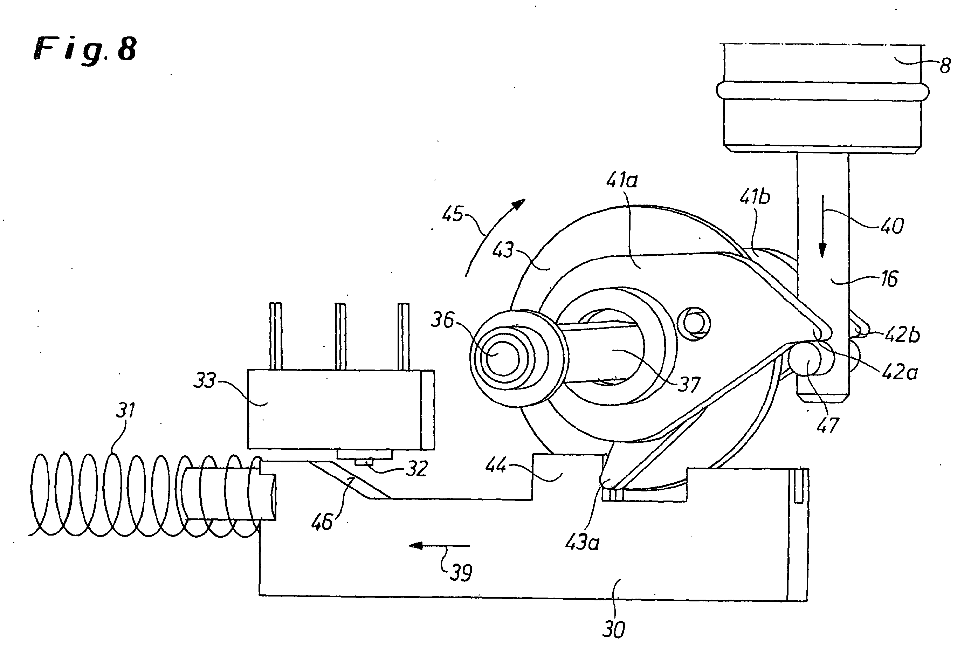

Wenn der Antrieb 23 betätigt wird, treffen zunächst die nasenartigen Vorsprünge 43a, 43b der mittleren Nockenscheibe 43 auf die Wandstege des Anschlags 44 des Schiebers 30 auf (vgl. Fig. 7) und verstellen in der Folge den Schieber 30 in Pfeilrichtung 39 gegen die Kraft der Druckfeder 31, wobei der über eine Steuerfläche 46 des Schiebers 30 abgleitende Mikroschalter 32 den Kontakt zum Schieber 30 verliert (vgl. Fig. 8). Sobald das Stellmittel 38 die in Fig. 8 gezeigte Drehlage erreicht hat, wird eine zweite Bewegungsstufe eingeleitet, in der die nasenartigen Vorsprünge 42a, 42b der äußeren Nockenscheiben 41, 41 b auf einen Querbolzen 47 oder dergleichen Anschlag der Axial-Schubstange 16 auftreffen, womit ab diesem Zeitpunkt nicht nur der Schieber 30 weiter in Pfeilrichtung 39 gestellt wird, sondern gleichzeitig auch die Axial-Schubstange 16 mit dem Sperrbolzen 11 in Pfeilrichtung 40 herausgezogen bzw. aus der Sperrung seiner Rastmittel (Kugeln) ausgerückt wird.

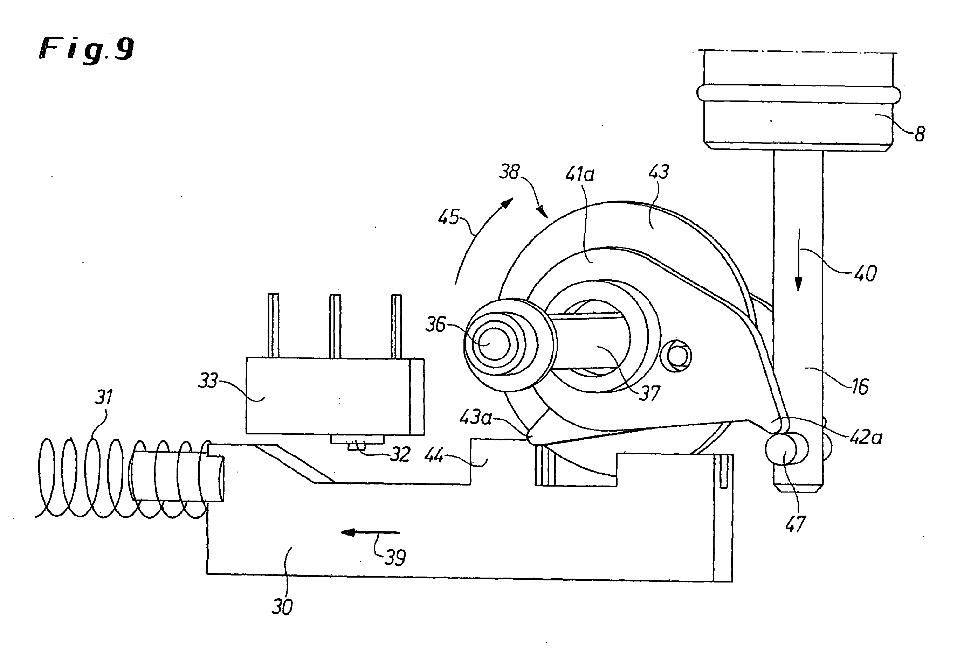

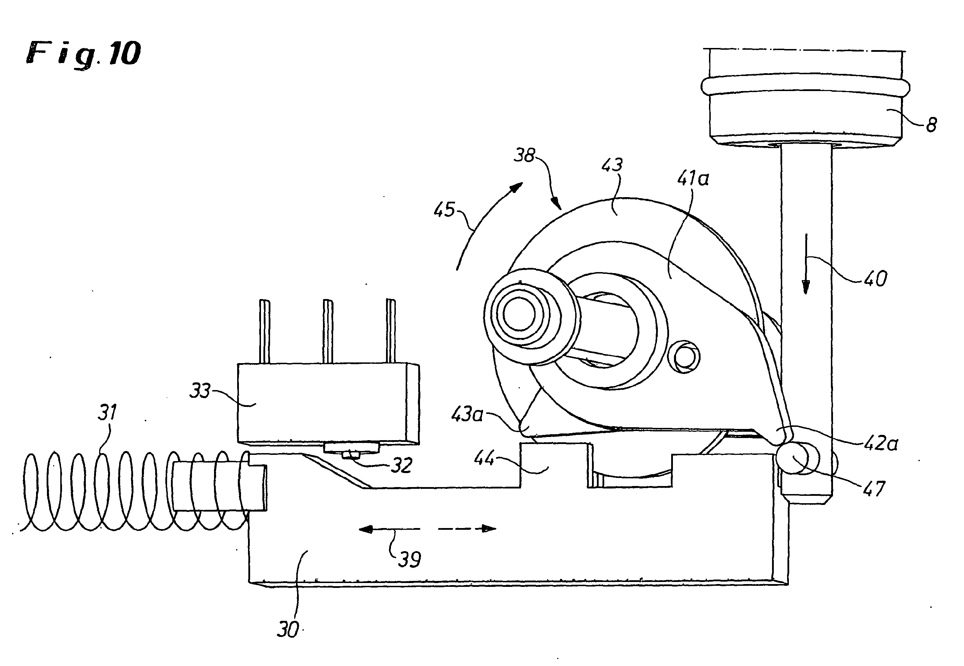

Die Drehlage des Stellmittels 38, in der die Kugelstange bzw. deren Kugelstangenlagerkopf 4 gelöst ist und der Kugeistangenlagerkopf axial abgerückt wird und selbsttätig in eine Position zwischen der Ruhe- und Betriebslage der Kugelstange 3 verschwenken kann, ist in Fig. 9 gezeigt. Die nasenartigen Vorsprünge 43a, 43b der mittleren Nockenscheibe 43 beginnen sich ab diesem Zeitpunkt von dem Anschlag 44 des Schiebers 30 zu lösen, der dann unter der Kraft der vorgespannten Druckfeder 31 gegen die Pfeilrichtung 39 zurückgestellt wird, wobei er gemäß Fig. 10 gegen die in seinen Rückstellweg herausgezogene Axial-Schubstange 16 aufläuft.

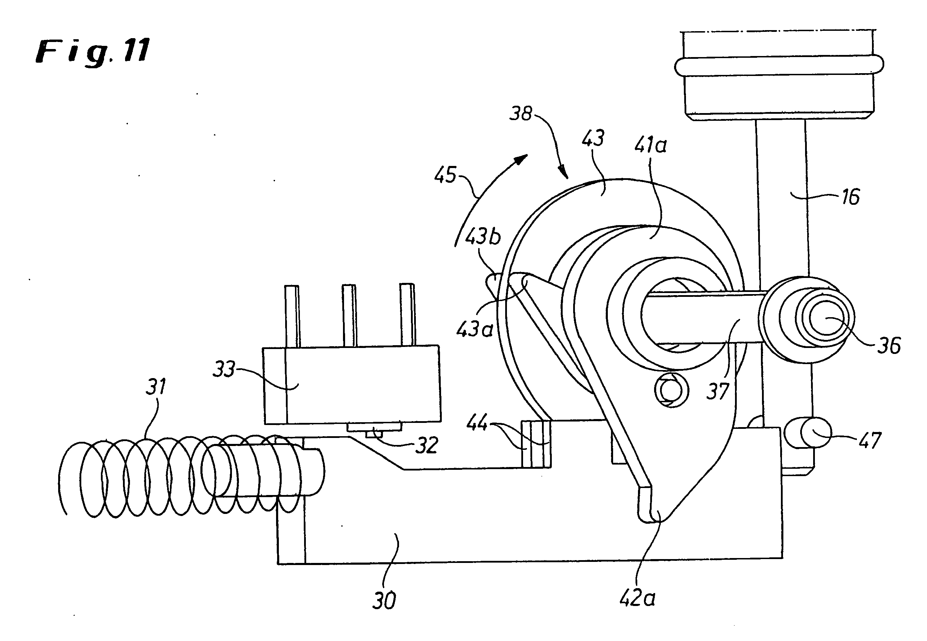

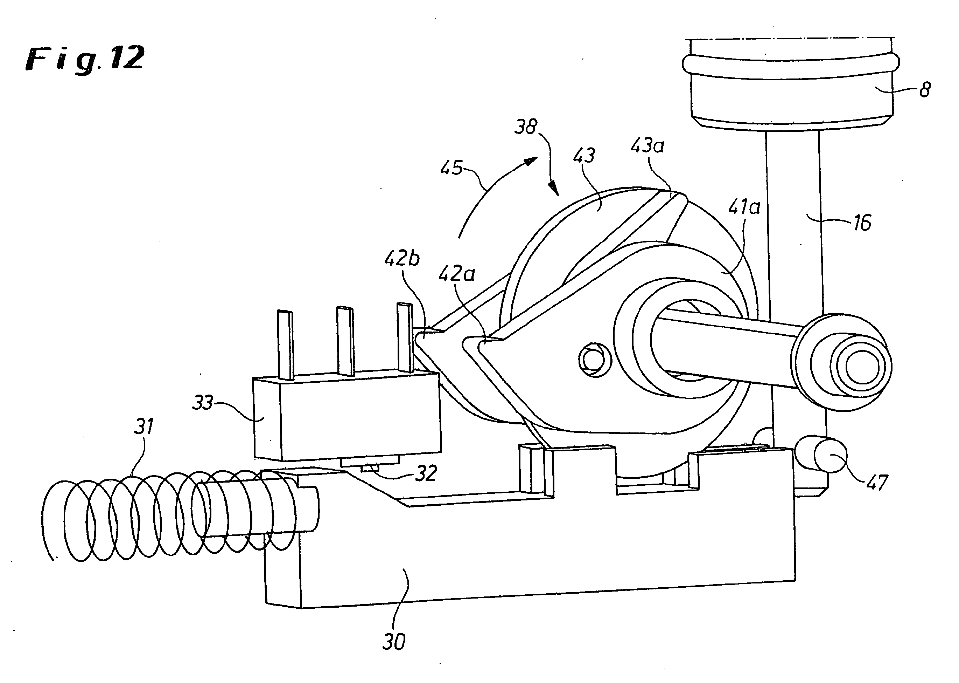

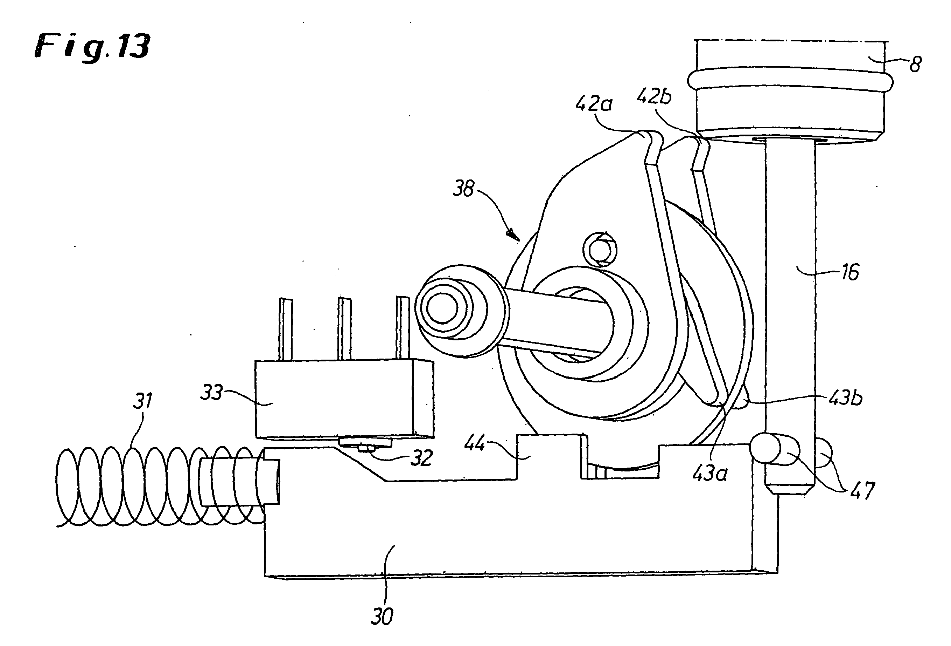

In dieser Ausrück-Endlage der Axial-Schubstange 16 beginnen die nasenartigen Vorsprünge 42a, 42b der äußeren Nockenscheiben 41 a, 41 b sich von dem Querbolzen 47 zu lösen und sich mit der Rotation in Pfeilrichtung 45 zunehmend von diesem zu entfernen (vgl. die Zwischen-Drehlagen nach den Fig. 11 und 12). Nach einer vollen Umdrehung (360°) schaltet eine Sensorik den Antrieb 28 aus wobei der Schieber 30, die Axial-Schubstange 16 und das Stellmittel 38 die in Fig. 13 dargestellte Drehendlage einnehmen. Diese entspricht allerdings noch nicht der Ausgangsposition (vgl. Fig. 6), in der die Kugelstange 3 mit ihrem Kugelstangenlagerkopf 4 verriegelt ist. Hierzu muß vielmehr die zum freien Verschwenken motorisch ausgelöste Kugelstange 3 von Hand in die gewünschte Betriebsstellung (Ruhe- oder Betriebsblage) verschwenkt werden, wobei die Axial-Schubstange 16 mit dem Sperrbolzen 11 gegen die sich dabei wieder vorspannende Druckfeder 18 (vgl. Fig. 2) entgegengesetzt zur Pfeilrichtung 40 der Ausrückbewegung zurückgestellt wird. Diese Grundstellung ist der Fig. 14 zu entnehmen, in der die Druckfeder 31 den Schieber 40 in seine Ausgangsposition zurückgeschoben hat. Der Mikroschalter 32 signalisiert durch seinen Kontakt mit dem Schieber 30 die ordnungsgemäße Verriegelung, und die Axial-Schubstange 16 wird durch den in ihrem Weg stehenden Schieber 30 daran gehindert, daß der Schwenkmechanismus ungewollt ausgelöst bzw. freigegeben wird. Das vielmehr erst wieder dann, wenn der Antrieb 28 betätigt wird, worauf die vorbeschriebenen Bewegungsabläufe einsetzen.

## Patentansprüche

1. Anhängekupplung (1) für Kraftfahrzeuge, umfassend eine fahrzeugfest angeordnete, aus einer verriegelten Ruhelage in eine verriegelte Betriebslage und umgekehrt schwenkbar gelagerte Kugelstange (3), die sowohl in ihrer Ruhelage als auch in ihrer Betriebslage über in Eingriff bringbare Formschlusskonturen (9, 10) einerseits eines Kugelstangenlagerkopfes (4) und andererseits eines diesem gegenüberliegenden Anbauteiles (5) drehfest festlegbar ist und an ihrem freien, vom Kugelstangenlagerkopf (4) entfernten Ende eine Kupplungskugel (2) trägt, wobei der Kugelstange zum Festlegen bzw. Freigeben der Verriegelung ein im Bereich des Kugelstangenlagerkopfes (4) mit radial ein- und ausrückbaren Rastmitteln zusammenwirkender, axial verstellbarer, gegen ein anstehendes Kraftelement (18) zurückstellbarer Sperrbolzen (11) zugeordnet ist,
**dadurch gekennzeichnet,**
**dass** der Sperrbolzen (11) zur Antriebsseite hin mit einer Axial-Schubstange (16) ausgebildet und über die Axial-Schubstange (16) motorisch ausrückbar an einen Antrieb (28) angeschlossen ist, der auf seiner Antriebswelle (36, 37) mit einem Stellmittel (38) versehen ist, das zeitversetzt zunächst mit einem orthogonal zur Axial-Schubstange (16) in deren Ausrückweg angeordnetem Schieber (30) und nach einer linearen Bewegung des Schiebers in Eingriff mit der Axial-Schubstange (16) zu deren linearen Verstellung kommt.

2. Anhängekupplung nach Anspruch 1,
**dadurch gekennzeichnet,**
**daß** das Stellmittel (38) zwei äußere, mit nasenartigen Vorsprüngen (42a, 42b) temporär mit einem am vorderen, von dem Sperrbolzen (11) entfernten Ende der Axial-Schubstange (16) vorgesehenen Querbolzen (47) zusammenwirkende Nockenscheiben (41 a, 41 b) und eine mittlere Nockenscheibe (43) aufweist, die mit mindestens einem nasenartigen Vorsprung (43a, 43b) in Rotationsrichtung (45) voreilend zu den nasenartigen Vorsprüngen (42a, 42b) der äußeren Nockenscheiben (41a, 41b) auf der Antriebswelle (36, 37) angeordnet ist und temporär mit einem Anschlag (44) des Schiebers (30) zusammenwirkt.

3. Anhängekupplung nach Anspruch 2,
**dadurch gekennzeichnet,**
**daß** die Nockenscheiben (41 a, 41 b; 43) mit rechteckigen Ausnehmungen auf einem Vierkantabschnitt (37) der Antriebswelle (36) angeordnet sind.

4. Anhängekupplung nach einem der Ansprüche 1 bis 3,
**dadurch gekennzeichnet,**
**daß** dem Schieber (30) ein den Verriegelungszustand der Kugelstange (3) signalisierender Mikroschalter (32) zugeordnet ist.

5. Anhängekupplung nach einem der Ansprüche 1 bis 4,
**gekennzeichnet durch**
ein den vorgeschobenen Schieber (30) in seine Ausgangslage zurückbewegendes Federmittel (31).

6. Anhängekupplung nach einem der Ansprüche 1 bis 5,
**dadurch gekennzeichnet,**
**daß** der Sperrbolzen (11) zentral in einer Hohlwelle (8) angeordnet ist, auf der der Kugelstangenlagerkopf (4) gelagert ist.

7. Anhängekupplung nach einem der Ansprüche 1 bis 6,
**dadurch gekennzeichnet,**
**daß** der Antrieb (28), der Schieber (30), der Mikroschalter (32) und das Stellmittel (38) als Gehäuseeinheit (21) in einem zweiteiligen KunststoffGehäuse (25, 26) angeordnet sind, das auch das vordere Ende der Axial-Schubstange (16) aufnimmt.

8. Anhängekupplung nach Anspruch 6 oder 7,
**dadurch gekennzeichnet,**
**daß** die Hohlwelle (8) über einen ringartigen Kragen (14) mit einem Anbauflansch (5) verschraubt ist.

9. Anhängekupplung nach Anspruch 7 oder 8,
**dadurch gekennzeichnet,**
**daß** eine Clipverbindung (22, 23) die Befestigungslage der auf die Hohlwelle (8) aufgeschobenen Gehäuseeinheit (21) sichert.

10. Anhängekupplung nach einem der Ansprüche 1 bis 9,
**dadurch gekennzeichnet,**
**daß** dem Sperrbolzen (11) in zwei im Abstand parallel voneinander vorgesehenen Radialebenen (I; II) gegenläufig wirkende Rastmittel (12, 13) zugeordnet sind.

## Claims

1. A hitch (1) for motor vehicles, comprising a coupling ball bar (3) being disposed so as to be fastened to the vehicle in a fixed manner, mounted so as to pivot from a locked resting position into a locked operating position and vice versa, said coupling ball bar (3) being capable of being fixed in position in its resting position as well as in its operating position via engageable positive connections (9, 10) of a coupling ball bar bearing head (4) on the one hand and, on the other hand, via a mounted part (5) located opposite said coupling ball bar bearing head (4) and said coupling ball bar (3) supporting a coupling ball (2) at its free end located at a distance from the coupling ball bar bearing head (4), with an axially displaceable locking pin (11), which can be returned against an available force element (18) being assigned to the coupling ball bar for fixing or releasing the locking mechanism, said locking pin (11) cooperating with radially engageable and disengageable locking means,
**characterized in**
**that** the locking pin (11) is configured with an axial push rod (16) towards the driving side and connected to a drive (28) via the axial push rod (16) so as to be disengageable by means of a motor, the drive shaft (36, 37) of said drive (28) being provided with a control element (38), which initially engages in a time-delayed manner with a slide (30) disposed orthogonally to the axial push rod (16) in the disengagement travel thereof and which engages with the axial push rod (16) after a linear movement of the slide for the purpose of the linear displacement thereof.

2. The hitch according to claim 1,
**characterized in**
**that** the control element (38) encompasses two outer cam plates (41 a, 41 b) temporarily cooperating with a cross bolt (47) provided at the front end of the axial push rod (16) located at a distance from the locking pin (11) and a middle cam plate (43) disposed on the drive shaft (36, 37) with at least one lug-shaped protrusion (43a, 43b) advancing in the . direction of rotation (45) to the lug-shaped protrusions (42a, 42b) of the outer cam plates (41 a, 41 b) and temporarily cooperating with a stop (44) of the slide (30).

3. The hitch according to claim 2,
**characterized in**
**that** the cam plates (41 a, 41 b; 43) with rectangular recesses are disposed on a square section (37) of the drive shaft (36).

4. The hitch according to one of claims 1 to 3,
**characterized in**
**that** a micro switch (32) signaling the locking state of the coupling ball bar (3) is assigned to the slide (30).

5. The hitch according to one of claims 1 to 4,
**characterized by**
a spring means (31) moving the advanced slide (30) back into its initial position.

6. The hitch according to one of claims 1 to 5,
**characterized in**
**that** the locking pin (11) is disposed centrally in a hollow shaft (8) on which the coupling ball bar bearing head (4) is mounted.

7. The hitch according to one of claims 1 to 6,
**characterized in**
**that** the drive (28), the slide (30), the micro switch (32) and the control element (38) are disposed as a housing unit (21) in a two-part plastic housing (25, 26), which also accommodates the front end of the axial push rod (16).

8. The hitch according to claim 6 or 7,
**characterized in**
**that** the hollow shaft (8) is screwed to a mounting flange (5) via a ring-like flange (14).

9. The hitch according to claim 7 or 8,
**characterized in**
**that** a clip connection (22, 23) secures the fastening position of the housing unit (21), which is pushed onto the hollow shaft (8).

10. The hitch according to one of claims 1 to 9,
**characterized in**
**that** locking means (12, 13) acting in the opposite direction are assigned to the locking pin (11) in two radial planes (I; II) being provided at a distance parallel to one another.

## Revendications

1. Dispositif d'attelage (1) pour des véhicules automobiles, comprenant une barre d'attelage (3), disposée de façon stationnaire sur le véhicule, logée de façon à pivoter d'une position de repos verrouillée dans une position de service verrouillée et inversement, qui aussi bien dans sa position de repos que dans sa position de service est susceptible d'être fixée de façon solidaire en rotation par des contours par complémentarité de forme (9, 10) susceptibles d'être amenés en engagement, d'une part d'une tête de logement de la barre d'attelage (4) et d'autre part d'une pièce rapportée (5) opposée à cette dernière et qui sur son extrémité libre, éloignée de la tête de logement de la barre d'attelage (4) porte une boule d'attelage (2), pour la fixation ou la libération du verrouillage, un boulon d'arrêt (11) coopérant dans la zone de la tête de logement de la barre d'attelage (4) avec un moyen d'enclenchement enclenchable et désenclenchable en direction radiale, réglable en direction axiale, susceptible d'être rappelé contre un élément de force (18) affleurant étant associé à la barre d'attelage,
**caractérisé en ce que**
en direction du côté d'entraînement, le boulon d'arrêt (11) est conçu avec une bielle axiale (16) et par l'intermédiaire de la bielle axiale (16), il est raccordé de façon débrayable par moteur sur un entraînement (28), qui sur son arbre d'entraînement (36, 37) est muni d'un moyen de réglage (38), qui avec un décalage dans le temps vient s'engager d'abord sur un coulisseau (30) disposé de façon orthogonale à la bielle axiale (16) dans sa course de débrayage et après un déplacement linéaire du coulisseau vient s'engager sur la bielle axiale (16), pour son ajustage linéaire.

2. Dispositif d'attelage selon la revendication 1,
**caractérisé en ce que**
le moyen de réglage (38) comporte deux disques à cames (41a, 41 b) extérieurs, coopérant temporairement avec des saillies (42a, 42b) du type de taquets avec un boulon transversal (47) prévu sur l'extrémité antérieure, éloignée du boulon d'arrêt (11) de la bielle axiale (16) et un disque à cames central (43), qui coopère avec au moins une saillie (43a, 43b) du type d'un taquet, qui est disposée avec un déphasage vers l'avant dans le sens de rotation (45) par rapport aux saillies (42a, 42b) du type de taquets des disques à cames extérieurs (41 a, 41 b) sur l'arbre d'entraînement (36, 37) et qui coopère temporairement avec une butée (44) du coulisseau (30).

3. Dispositif d'attelage selon la revendication 2,
**caractérisé en ce que**
les disques à cames (41a, 41b ; 43) sont disposés avec des évidements rectangulaires sur une section carrée (37) de l'arbre d'entraînement (36).

4. Dispositif d'attelage selon l'une quelconque des revendications 1 à 3, **caractérisé en ce que**,
un microrupteur (32)signalant la position de verrouillage de la barre d'attelage (3) est associé au coulisseau (30).

5. Dispositif d'attelage selon l'une quelconque des revendications 1 à 4, **caractérisé par**
un moyen à ressort (31) ramenant vers l'arrière dans sa position initiale le coulisseau (30) poussé vers l'avant.

6. Dispositif d'attelage selon l'une quelconque des revendications 1 à 5, **caractérisé en ce que**,
le boulon d'arrêt (11) est disposé de façon centrale dans un arbre creux (8), sur lequel est logée la tête de logement de la barre d'attelage (4).

7. Dispositif d'attelage selon l'une quelconque des revendications 1 à 6, **caractérisé en ce que**,
l'entraînement (28), le coulisseau (30), le microrupteur (32) et le moyen de réglage (38) sont disposés sous forme d'unité de boîtier (21) dans un boîtier en matière plastique (25, 26) en deux éléments, qui réceptionne également l'extrémité antérieure de la bielle axiale (16).

8. Dispositif d'attelage selon la revendication 6 ou 7,
**caractérisé en ce que**
l'arbre creux (8) est vissé par l'intermédiaire d'une collerette annulaire (14) sur une bride de montage (5).

9. Dispositif d'attelage selon la revendication 7 ou 8,
**caractérisé en ce que**
un assemblage par clip (22, 23) bloque la position de fixation de l'unité de boîtier (21) emboîtée sur l'arbre creux (8).

10. Dispositif d'attelage selon l'une quelconque des revendications 1 à 9, **caractérisé en ce que**,
des moyens d'enclenchement (12, 13) agissant à contresens sont associés au boulon d'arrêt (11), dans deux plans radiaux (I, II) prévus à la parallèle l'un à l'autre avec un écart.
